# EUROPEAN PATENT APPLICATION

(11) **EP 2 517 912 A2**
(43) Date of publication of application: **31.10.2012**
(21) Application number: 12165289.5
(22) Date of filing: 24.04.2012
(51) Int. Cl.: B60J 5/10

(54) **Improvements in or relating to doors**

(30) Priority: 26.04.2011 GB 201106875
(71) Applicant: Nissan Motor Manufacturing (UK) Ltd., Cranfield Bedfordshire MK43 0DB (GB)
(72) Inventor: Byford, Trevor, Cranfield, Bedfordshire MK430DB (GB); Burbridge, Colin, Cranfield, Bedfordshire MK430DB (GB)

(57) **Abstract**

A hinge 40 for a vehicle door (16L or 16R, Fig.1) comprises: a first arm 42, a second arm 46 pivotably mounted thereto, and a third arm 52 slidably supported by arm 46, wherein arm 42 is arranged to mount rigidly to a vehicle body by bolts in holes 44; and the third arm is arranged to allow both rotation and translation of said door relative to the vehicle. This allows an overlapped door (16L, Fig. 1) to be slid sideways and opened past an overlapping door (16R, Fig. 1). Alternatively, it allows doors where seals (34, Fig. 3) abut each other to be opened without undue seal wear. At least one door may be latched to the vehicle when closed. A rotatable handle (30L, 30R, Fig. 1) may be provided to operate said latch. Arm 52 may be biased to the extended condition.

## Description

The present invention is concerned with improvements in or relating to doors and particularly, but not exclusively, to vehicle doors such as those found on vans and other light commercial vehicles. Aspects of the invention relate to a door arrangement and to a vehicle.

It is well known to equip commercial vehicles, such as vans or larger light commercial vehicles, with manually operable doors for accessing the cargo area of the vehicle. Generally, such doors are vertically hinged; that is, they rotate in a generally horizontal plane about a substantially vertical axis.

Typical large trucks or vans, such as freight vans, are provided with side or rear access doors to allow loading and unloading of large or irregularly shaped items. In order to provide sufficient access for large items, such freight van doors have conventionally been arranged with two oppositely pivoting door panels which, when opened, provide a large opening into the cargo area.

In one known arrangement, each of the two doors at least partially overlaps a medially located, vertical post member that is rigidly fixed to the vehicle body. The two door panels overlap the post member substantially symmetrically to provide sealing closure of the panels, such that either door panel can be opened while the other door panel remains closed. When both of the doors are opened, however, the resulting access is obstructed by the centre post unless a time consuming effort is made to remove, and subsequently replace, the post.

In another known arrangement, one of the doors is provided with a recessed flange extending at least partly along the vertical edge (free edge) of the door distal from the hinged edge. The doors are arranged such that, in the closed position, the free edge of the second door outwardly overlaps the flange on the first door. The first door may be latched to the body of the vehicle in the closed position with the second door being releasably secured to the first door through the overlapping region. Alternatively, the second door may be selectively latched to the vehicle in the closed position, with the overlap preventing opening of the first door. Seals may be provided between the doors in the overlapping region to prevent ingress of dirt, air or moisture, as required.

A disadvantage of this arrangement, however, is that the first door is unable to open until the second door has been opened to an extent that permits the flange of the first door to arc past the free edge of the second door. That is to say, the doors must be opened in sequence, with the second door being opened before the first door. Conversely, the first door must be closed before the second door, since the flange of the first door is required to lie behind the free edge of the second door in the closed position. This may be inconvenient in some situations.

It is an aim of the present invention to address this issue. Embodiments of the invention provide a door arrangement in which at least one door is able to move in a translational manner away from the other door prior to rotation. By so doing, any overlap between the doors is removed, and thus either door can be rotated towards an open position independently of the other. In arrangements in which the doors do not overlap, but rather abut at their free edges, the invention permits any pressure applied to the edge seals to be relieved prior to rotation, thereby improving seal life. Other aims and advantages of the invention will become apparent from the following description, claims and drawings.

Aspects of the present invention therefore provide a door arrangement and a vehicle, as claimed in the appended claims.

According to an aspect of the invention for which protection is sought, there is provided a door arrangement for a vehicle comprising first and second oppositely hinged doors arranged to rotate between closed and open positions about substantially parallel axes, wherein at least one of said first and second doors is mounted for translational movement away from the other door prior to rotation.

In an embodiment, the first and second oppositely hinged doors are contiguous.

In an embodiment, one of the first and second oppositely hinged doors overlaps the other oppositely hinged door when the doors are closed.

In an embodiment, at least one of the first and second doors comprises a sealing member disposed at or adjacent a free edge thereof, the sealing member being arranged to sealingly abut or engage with a corresponding free edge of the other door in the closed position.

In an embodiment, the sealing member extends partially or fully along the length of the free edge of the door.

In an embodiment, each of the first and second doors comprise respective sealing members, the sealing members being arranged to seal against each other in the closed position of the doors.

In an embodiment, the doors are arranged such that, in the closed position, at least a portion of the second door overlaps at least a portion of the first door. In this embodiment, the first door is mounted for translational movement away from the second door; so as to remove the overlap, and thereby to permit both doors to rotate towards the open position substantially independently of each other.

In an embodiment, at least one of the first and second doors is arranged to be latched in the closed position to a part of the vehicle. The arrangement may therefore comprise latching or locking means for latching or locking one or both doors in the closed position.

In an embodiment, the latching means comprises a cam-lock and shaft arrangement. The cam-lock and shaft arrangement may be manually operable by means of a rotatable handle disposed on the exterior surface of the door.

In an embodiment, the rotatable handle is provided with cam means arranged to push the doors apart, so as to effect the translational movement of one door away from the other, on rotation of the handle.

In an embodiment, the door hinge or hinges for at least one door comprise a first leaf adapted for mounting to a body of the vehicle and a second leaf adapted for attachment to the vehicle door, wherein the second leaf is movable between a first, extended position; and a second, retracted position; so as to permit translational and rotational movement of the door relative to the vehicle body.

In an embodiment, the length of the second leaf can be adjusted between the extended and retracted positions. This advantageously permits the vehicle door attached thereto to translate relative to the hinge point. For example, from a closed position of the door, in which the second leaf is in its extended position, the door can be moved towards the hinge point by movement of the second leaf into the retracted position.

In an embodiment, adjustment of the second leaf between the extended and retracted positions is achieved by means of a third leaf or leaf portion which may comprise a part of the second leaf. In this embodiment, the third leaf or leaf portion is adapted for substantially rigid attachment to the door, and is arranged to be slidable relative to the second leaf so as to adopt the extended and retracted positions. In this embodiment, therefore, the second leaf proper is not directly attached either to the side wall or to the door but is rotatably connected to the first leaf and slidably engaged with the third leaf or leaf portion.

A slot or guide may be formed in the second leaf of the hinge. The third leaf may be engaged in the slot or guide for sliding movement relative thereto.

The hinge may comprise biasing means for biasing the second leaf towards the first, extended position. In an embodiment, the biasing means comprises a compression spring disposed in the slot.

According to a further aspect of the invention for which protection is sought, there is provided a vehicle having a door arrangement as set out in any of the preceding paragraphs.

Within the scope of this application it is envisaged that the various aspects, embodiments, examples, features and alternatives set out in the preceding paragraphs, in the claims and/or in the following description and drawings may be taken independently or in any combination thereof. Features disclosed in connection with one embodiment are applicable to all embodiments except where there is incompatibility of features.

The present invention will now be described, by way of example only, with reference to the accompanying drawings, in which:
Figure 1 is a rear view of a truck or van having overlapping hinged rear access doors;
Figure 2 is a sectional plan view through the doors shown in Figure 1 in a closed position;
Figure 3 is a sectional plan view through a pair of non-overlapping hinged access doors;
Figure 4 illustrates end, side and plan views of a hinge for a vehicle door embodying one form of the invention;
Figures 5a to 5d illustrate an opening operation of the hinge of Figure 4;
Figures 6a to 6d illustrate a closing operation of the hinge of Figure 4; and
Figure 7 illustrates final closing operation of the doors of Figure 3.

In the figures and in the following description, like reference numerals indicate, as far as possible, like parts.

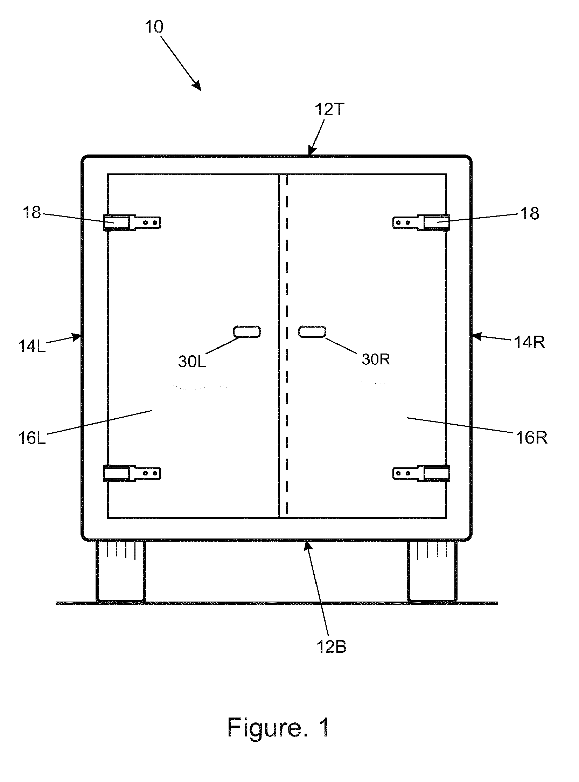

Referring firstly to Figure 1, a cargo vehicle such as a van is shown having a cargo area 10 defined at least in part by top and bottom walls 12T, 12B and left and right side walls 14L, 14R. The cargo area 10 is closed at a forward end thereof by the vehicle cab or by a front wall (not shown) and at a rearward end thereof by a pair of opposing doors 16L, 16R.

Each of the doors 16L, 16R is hinged at its outer edge to a respective side wall 14L, 14R of the vehicle by means of hinges 18 for independent rotation between closed and open positions about a substantially vertical axis.

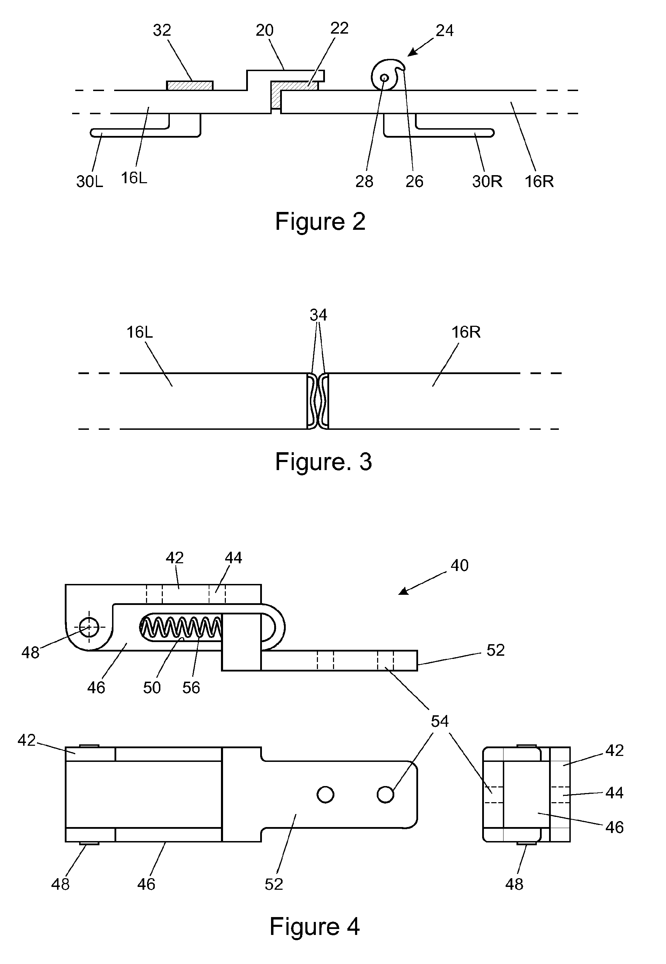

In the embodiment of Figure 1, a first one of the doors 16L features a recessed flange 20 extending from the free or inner edge thereof which, in the closed position of the doors, is overlapped by the opposing free or inner edge of the second door 16R. The arrangement is shown more clearly in Figure 2 which illustrates a sectional plan view through the doors 16L, 16R in the closed position.

It can be seen from Figure 2 that, in the closed position of the doors 16L, 16R, the flange 20 associated with the first door 16L lies behind the free edge of the second door 16R in overlapping abutment therewith. Seal members 22 are provided on one or both of the doors 16L, 16R in the region of overlap so as to reduce or prevent ingress of moisture, dirt or air.

The second door 16R is provided with latching means 24 for releasably latching the door to the vehicle so as to prevent opening. The latching means are of a conventional cam-lock and shaft form, comprising one or more cam-locks in the form of hook-like members 26 fixedly mounted on a rotatable shaft 28 that is operable by means of a handle 30R provided on the outside of the door. Operation of the handle 30R effects rotation of the shaft 28 to bring the or each hook-like member 26 into latching engagement with a cooperative catch member (not shown) rigidly mounted to the vehicle.

Due to the overlapping cooperation between the first and second doors 16L, 16R, the first door 16L is unable to move from the closed position to the open position until the second door 16R has been rotated by an amount sufficient to permit the free edge of the first door 16L to arc past the second door. That is to say, the doors are required to be opened sequentially, with the second door being rotated open first, followed by the first door.

It will be appreciated that latching means are not required for the first door 16L, since it is unable to open unless the second door is open. Thus, latching the second door 16R in the closed position has the additional effect of holding the first door 16L in the closed position. To prevent the first door from rotating inwardly, stop means 32 may be provided on the upper and/or lower walls against which the first door abuts in the closed position. Such stop means may comprise projections, formations or other surfaces defined by the top and bottom walls 12T, 12B of the vehicle.

It can therefore be seen that the second door 16R is prevented from rotating inwardly by the flange 20 of the first door 16L which is itself in abutment with the stop means 32. Conversely, the first door 16L is prevented from rotating outwardly by the second door 16R which is itself latched to the vehicle in the closed position by the latching arrangement 24.

The requirement to open the doors sequentially can be inconvenient in some circumstances, for example where the second door 16R is inaccessible; or is obstructed from opening by a sufficient degree to permit opening of the first door 16L.

Figure 3 illustrates a vertical section through an alternative known arrangement of vehicle access doors. In this arrangement, the free edges of the doors 16L, 16R do not overlap; but are arranged to come into edgewise abutment in the closed position. In practice, the doors 16L, 16R are sized to provide a degree of clearance between the edges thereof in the closed position; and in this case, seals 34 are provided extending from the edges of the doors and which, in the closed position, come into sealing abutment with each other as shown. The seals 34 are configured such that a slight compression of each seal is effected in the closed position, so as to reduce or prevent ingress of moisture, dirt or air.

Although in this arrangement, each of the doors 16L, 16R can be opened independently of the other; that is to say, in any order; a disadvantage is that each seal 34 may be subject to significant frictional or shear forces against the other during the opening and closing of the doors. This can reduce the effectiveness of the seal; or can reduce seal life.

Figure 4 illustrates plan, side and end views of a hinge embodying one form of the invention, shown generally at 40. (this corresponds to the simple hinge 18 of Figure 1)

The hinge 40 comprises a first arm or leaf 42 arranged to be rigidly mounted to the vehicle, for example to an end face of the side wall 14L. The first leaf 42 is provided with mounting holes 44 for rigidly mounting the hinge to the side wall of the vehicle. A second arm or leaf 46 is hingedly attached to the first leaf 42 for rotation about a hinge point 48, and features a lengthwise slot 50 formed therein. A third leaf or slider 52, arranged to be rigidly mounted to a respective door 16L of the vehicle, is cooperatively engaged in the slot 50 formed in the second leaf 46 for sliding movement relative thereto between a first, extended position (illustrated) and a second, retracted position. The third leaf 52 is provided with mounting holes 54 for rigidly mounting the hinge to a door 16L of the vehicle. The third leaf 52 is thus rotationally and slidably connected to the first leaf 42 by means of the second leaf 46.

Biasing means, in the form of a compression spring 56, is disposed in the slot 50 provided in the second arm 46 for biasing the third leaf 52 towards the extended position, the purpose of which is described below.

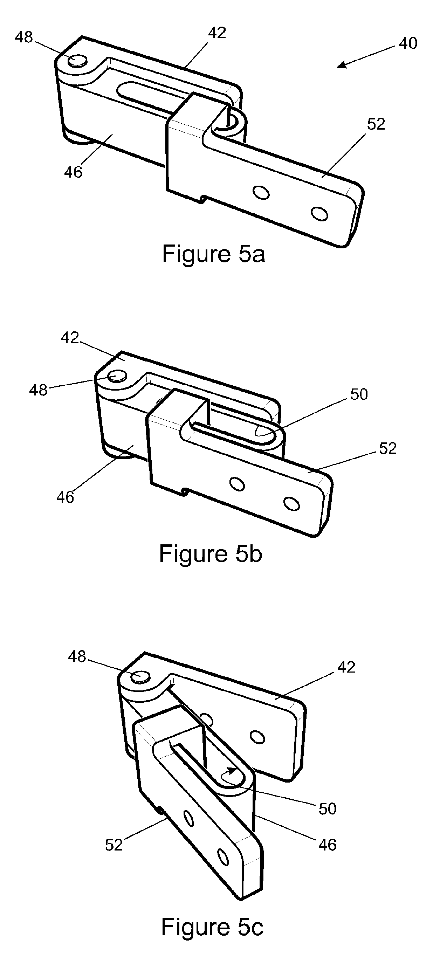

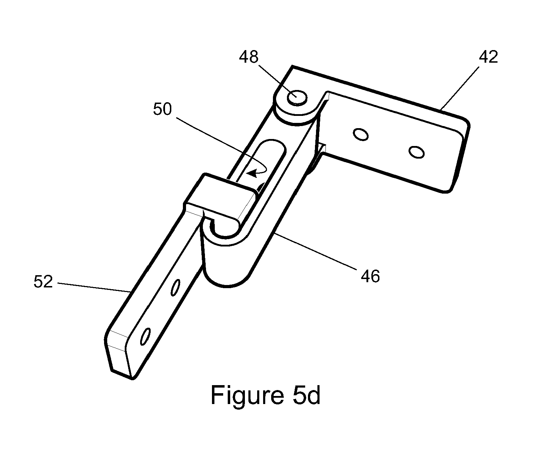

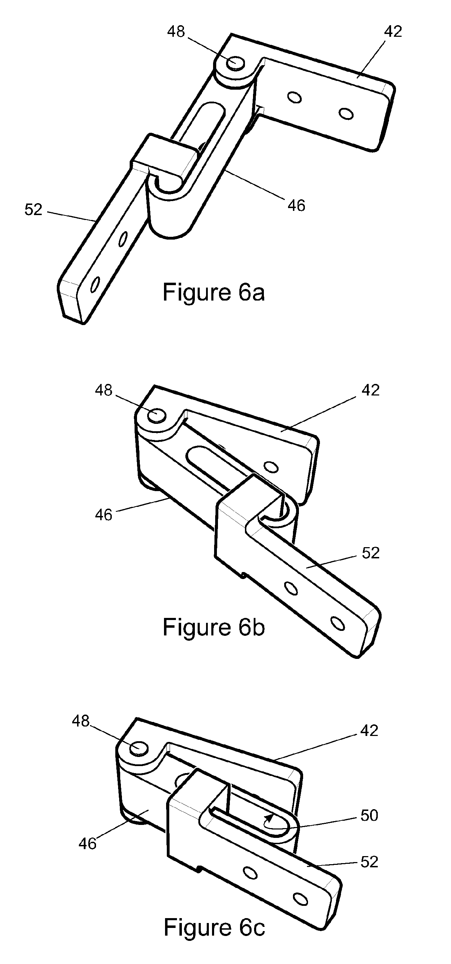

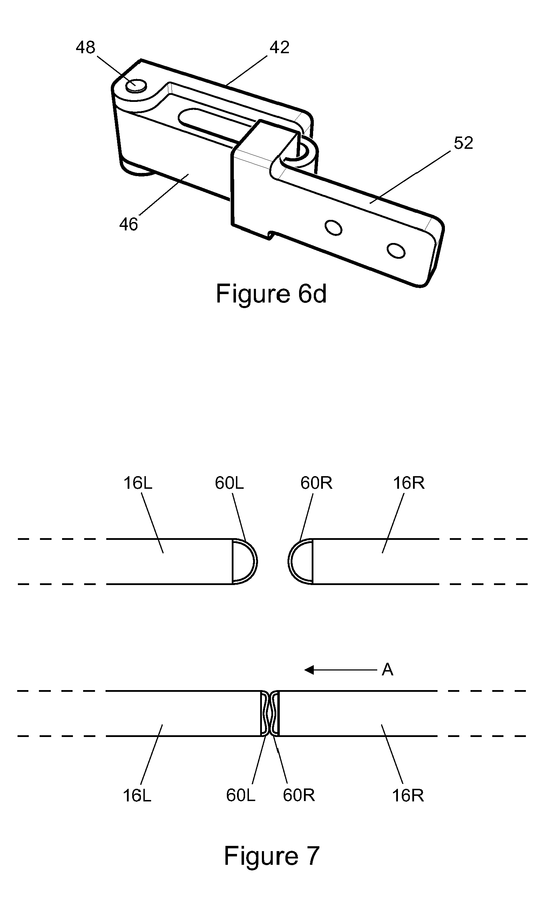

Figures 5a to 5d illustrate an opening sequence of the hinge of Figure 4. The hinge 40 can be used with either or both doors 16L, 16R; it will be appreciated that the orientation of the hinge shown in Figures 5 and 6 is that required for use with the first door 16L. The skilled person will immediately recognise that for use with the second door 16R, the orientation of the hinge 40 shown in Figure 5 should be reversed.

In Figure 5a, the hinge 40 is in its fully closed position, with the first and second leaves 42, 46 in substantially parallel alignment; and the third leaf 52 in its extended position, to which it is biased by the spring 56 (not shown in Figure 5a). In this position of the hinge 40, the doors 16L, 16R are disposed as shown in Figure 2, with the flange 20 of the first door 16L inwardly overlapping the edge of the second door 16R.

In Figure 5b, the hinge 40 is in a so-called release position in which the first and second leaves 42, 46 remain in parallel alignment; but the slider 52 is moved towards its retracted position against the biasing force of the spring 56. In moving to this position of the hinge 40, the first door 16L is translated in a sideways movement away from the second door 16R, towards the hinge point 48 of the hinge 40; such that the flange 20 no longer overlaps the second door 16R, thereby permitting opening rotation of the first door 16L whilst the second door 16R remains closed.

In Figure 5c, in a so-called partially open position of the hinge 40, the second leaf 46 is rotated outwardly relative to the first leaf 42, with the third leaf 52 still in its retracted position. Here, the first door 16L would be partially open with the second door 16R remaining closed. It will be appreciated that the opening of the first door 16L whilst the second door remains closed is possible due to the translational movement of the first door 16L relative to the second door 16R, which removes the restriction presented by the overlap between the doors.

In this Figure, the third leaf is maintained in its retracted position by manual force provided by the user against the biasing force of the spring. In practice, this pressure can be released, so as to move the third leaf 52 back to the extended position thereof; thus causing corresponding reverse translational movement of the door 16L, as soon as the flange 20 clears the free edge of the closed second door 16R.

In Figure 5d, the hinge 40 is in the fully open position, with the second leaf 46 rotated through substantially 90° relative to the first leaf 42; and the third leaf 52 having moved back to the extended position under the biasing force of the spring 56. Here, the first door 16L will be in its fully open position; although it will be appreciated that the second leaf 46 may, in its fully open position, be arranged to rotate through more than 90° relative to the first leaf 42. The illustrated embodiment is not intended to be limiting in this respect.

Figures 6a to 6d illustrate a closing sequence of the hinge 40. In Figure 6a, the hinge 40 is in the fully open position shown in Figure 5d; wherein the second leaf 46 is rotated through 90° (or more) relative to the first leaf 42, and the third leaf 52 is in its extended position.

In Figure 6b, in a so-called partially closed position, the second leaf 46 is rotated towards the first leaf 42; with the third leaf 52 still in the extended position.

In Figure 6c, the hinge 40 is shown just prior to adopting the fully closed position. Here, the second leaf 46 is almost fully closed but, just prior to closing, the third leaf 52 is moved into its retracted position against the biasing force of the spring 56. This permits the first door 16L to be slid away from the closed second door 16R in a translational movement, so that the flange 20 of the first door 16L clears the free edge of the second door 16R; and also any sealing surface provided thereon.

In Figure 6d, the hinge 40 is shown in the fully closed position, in which the first and second leaves 42, 46 are in substantially parallel alignment; and the third leaf 52 has been moved into the extended position under the biasing force of the spring 56. In adopting this position, the first door 16L is slid towards the closed second door 16R in a translational movement, such that the flange 20 engages behind the free edge of the second door. The doors 16L, 16R thus retake the position shown in Figure 2.

Referring to Figure 7, the final closing movement of the vehicle doors of Figure 3 is shown using the hinge of Figure 4. In this case, the final translational movement of the closing door 16R, depicted by arrow A, permits the cooperating seals 60L, 60R on the abutting surfaces of the free edges of the doors to be compressed substantially directly towards each other, with little or no frictional or shear force applied thereto. In addition to forming a more effective seal, this significantly reduces the wear on the seal members; and thus prolongs their life.

While the invention has been described above in connection with one particularly advantageous embodiment, it will be understood that various modifications can be made thereto within the scope of the appended claims.

For example, in the illustrated embodiment, after rotating the handle 30L or 30R to unlatch the door, the user is required to effect the translational (sliding) movement of one door away from the other against the biasing force of the spring. It is envisaged however, that the rotational operation of the handle to unlatch the door may also be used to effect the translational movement of the door. This may be achieved by providing a cam or the like on the handle shaft which, when rotated to unlatch the door, pushes the two doors apart into the release position shown in Figure 5b.

This may be advantageous when the doors in question are particularly heavy, as it easily permits a substantially even lateral force to be applied to the door to ensure that the upper and lower hinges are retracted substantially equally; without which the door may potentially become misaligned or twisted. Alternatively or in addition, power assistance may be provided for door opening by the use of rotating or linear motors or rams. These may be powered by electricity, hydraulics, or pneumatics, as may be considered appropriate. Where rotating motors are used, they may be used with threaded drives to co-ordinate lateral displacement of the top and bottom hinges. Such technologies are peripheral to the main embodiments of the invention, and will therefore not be discussed further.

The hinge of the invention may be applied to one or both doors of a vehicle door arrangement. It will also be understood that the seal members may be provided on one or both doors.

The hinge 40 may be formed from any suitable material having the required mechanical properties. For example, a plastic material may be used for light duty doors; whilst steel or another metal may be used for heavy duty applications.

It will be appreciated that the present invention provides a simple, yet highly effective, solution to the problem of enabling independent door opening in the case of overlapping access doors. By allowing at least one of the doors to translate away from the other prior to rotation, the overlap is removed so that the normally overlapped door can be opened even while the other door remains closed. Thus, either door can be opened independently of the other, negating the need for a medially located post whilst improving seal performance between the doors.

On the other hand, the invention also solves the problem of seal wear and deterioration in the case of abutting doors having flexible seals around their perimeter. By allowing the doors to part away from each other slightly by a translation movement, pressure on the seals is relieved before the hinges allow the doors to swing open. This enables an improved seal to be provided, and greatly improves seal life.

Nevertheless, the invention is not limited to use in vehicles; and may find application in any arrangement comprising opposing doors in which one door overlaps the other, or in which seals are provided between the doors.

## Claims

1. A door arrangement for a vehicle comprising first and second oppositely hinged doors (16L, 16R) arranged to rotate between closed and open positions about substantially parallel axes (48), wherein at least one of said first and second doors (16L, 16R) is mounted for translational movement away from the other door (16R, 16L) prior to rotation.

2. A door arrangement as claimed in claim 1, wherein the first and second oppositely hinged doors (16L, 16R) are contiguous.

3. A door arrangement as claimed in claim 2, wherein at least a portion of the second door (16R) overlaps at least a portion (20) of the first door (16L) when the doors are closed.

4. A door arrangement as claimed in any preceding claim, wherein at least one of the first (16L) and second (16R) doors comprises a sealing member (22) disposed at or adjacent a free edge thereof, the sealing member (22) being arranged to sealingly abut or engage with a corresponding free edge of the other door (16R, 16L) in the closed position.

5. A door arrangement as claimed in any preceding claim, wherein each of the first (16L) and second (16R) doors comprise respective sealing members (34), the sealing members being arranged to seal against each other in the closed position of the doors.

6. A door arrangement as claimed in any one of claims 3 to 5, wherein the first door (16L) is mounted for translational movement away from the second door (16R) so as to remove the overlap, thereby to permit each door (16L, 16R) to rotate towards the open position substantially independently of the other.

7. A door arrangement as claimed in any preceding claim, comprising latching means (24) for latching at least one of the first and second doors (16L, 16R) to a part of the vehicle in the closed position.

8. A door arrangement as claimed in claim 7, comprising rotatable handle means (30R) for manually operating the latching means (24) so as to latch or unlatch the at least one door (16R).

9. A door arrangement as claimed in claim 8, wherein the handle means (30R) comprises a cam arranged to effect the translational movement of the door (16R) away from the other door (16L) on rotation thereof.

10. A door arrangement as claimed in any preceding claim, wherein the door hinge (40) or hinges for at least one door (16L) comprise a first leaf (42) adapted for mounting to a body (14L) of the vehicle and a second leaf (46) adapted for attachment to the vehicle door (16L), wherein the second leaf (46) is movable between a first, extended position and a second, retracted position, so as to permit translational and rotational movement of the door (16L) relative to the vehicle body (14L).

11. A door arrangement as claimed in claim 10, wherein the second leaf (46) of the hinge (40) includes a third leaf portion (52) for attachment to the door (16L), the third leaf being arranged to be slidable relative to the second leaf (46) between the extended and retracted positions.

12. A door arrangement as claimed in claim 11, wherein a slot or guide (50) is formed in the second leaf (46) of the hinge (40), and wherein the third leaf (52) is engaged in the slot or guide (50) for sliding movement relative thereto.

13. A door arrangement as claimed in any of claims 10 to 12, comprising biasing means (56) for biasing the second leaf (46) of the hinge (40) towards the first, extended position.

14. A door arrangement as claimed in claim 13, wherein the biasing means of the hinge (40) comprises a compression spring (56) disposed in the slot (50).

15. A vehicle having a door arrangement as claimed in any preceding claim.
